# EUROPEAN PATENT APPLICATION

(11) **EP 4 397 456 A1**
(43) Date of publication of application: **10.07.2024**
(21) Application number: 22863923.3
(22) Date of filing: 28.03.2022
(51) Int. Cl.: B25J 15/04

(54) **ROBOT, ROBOT CONTROL METHOD, AND PROGRAM**

(30) Priority: 02.09.2021 JP 2021143244
(71) Applicant: OMRON Corporation, Kyoto 600-8530 (JP)
(72) Inventor: ABE, Masayoshi, Kyoto-shi, Kyoto 600-8530 (JP); KAWAKAMI, Shinji, Kyoto-shi, Kyoto 600-8530 (JP); KANAI, Akinobu, Kyoto-shi, Kyoto 600-8530 (JP); SAITOH, Yumi, Kyoto-shi, Kyoto 600-8530 (JP)
(74) Representative: SONN Patentanwälte GmbH & Co KG
(86) International application number: PCT/JP2022/015157
(87) International publication number: WO 2023/032333

(57) **Abstract**

A robot (10) including a robot arm (12), a robot hand (14) provided to a distal end of the robot arm (12), a finger part (15) provided to the robot hand (14), and a claw part (18). The finger part (15) includes a first mounting/demounting part (16) provided to a distal end of the finger part (15) and capable of mounting and demounting a claw part (18) so that the claw part (18) has a moveable range in a mounted state of the claw part (18). The claw part (18) includes a second mounting/demounting part (20) corresponding to the first mounting/demounting part (16) and capable of mounting and demounting to the distal end of the finger part (15), with the claw part (18) able to grip a workpiece (90) by an opening/closing action of the finger part (15) in a mounted state to the distal end of the finger part (15).

## Description

### Technical Field

The present disclosure relates to a robot, a robot control method, and a robot control program.

### Background Art

In conventional technology, in order to grip various workpieces with a hand section of a robot, a claw part corresponding to the workpiece is mounted to the distal end of the hand section. As a conventional technique, there is a technique in which a claw part specific to a workpiece is switched over manually on a hand section of a robot. There is moreover a technique in which a so-called tool changer mechanism, which is capable of automatically coupling or decoupling a robot and a hand as a consolidated bulk rigid body, utilizing a mechanical mechanism, an electrical mechanism, a suction mechanism using air, or the like to switch over for each hand.

Moreover, an exchange mechanism for a claw part of a robot hand is proposed for a robot hand having the most popular configuration of a two parallel fingered hand so as to be able to interchange claw parts with certainty simply by changing an approach direction of a robot hand (Patent Document 1). In this mechanism, after making face-to-face contact with a finger base, the robot hand body is caused to approach a holder along a horizontal direction, and while a first taper portion expanding outward is being pressed wider a claw part formed at the open end side of a lever is engaged with an engaging portion and placed in face-to-face contact with a back plate such that the claw part is held by the lever, and also a lock pin provided to the finger base for latching the claw part is released. Moreover, after the finger base has been placed in face-to-face contact, the hand body is brought in a perpendicular direction toward the holder, latched to the claw part by the lock pin, and a second taper portion that expands toward the inside from an apex of the first taper portion is pressed wider and releases engagement between the claw part and the holder.

### Related Art Literature

### Patent Literature

Patent Document 1: Japanese Patent Application Laid-Open No. 2017-185583

### SUMMARY OF INVENTION

### Technical Problem

However, there is a problem in cases in which a claw part specific to a workpiece is switched over manually in that a robot in operation needs to be stopped, and the burden on an operator is also increased.

Moreover, there is a problem with a tool changer in that there is an increase in system cost proportional to the number of types of workpiece due to needing to prepare a hand for each workpiece. Furthermore, due to the mechanism present on the hand side for coupling-decoupling to the arm being both bulky and heavy, in cases in which the hand section contacts a workpiece, peripheral environment, or the like due for example to the speed of an assembly task by the robot being raised mistakenly, there is a high risk that the hand section will be damaged, or that the workpiece or peripheral environment will be damaged.

Moreover, due to there being no room for movement of the claw part with respect to the hand section in the technology described in Patent Document 1, there is a possibility that the hand section will be damaged or that the workpiece or peripheral environment will be damaged, and high speed operation is not possible.

In consideration of the above circumstances, an object of the present disclosure is to provide a robot, a robot control method, and a robot control program capable of reducing the possibility that the hand section will be damaged or that the workpiece or peripheral environment will be damaged, and capable of executing high speed operation.

### Solution to Problem

In order to achieve the above object, the technology disclosed herein is configured including a claw part; and a hand section provided at a distal end of a robot arm and including a first mounting/demounting part configured for mounting and demounting the claw part such that the claw part has a moveable range in a mounted state of the claw part, the claw part being provided with a second mounting/demounting part corresponding to the first mounting/demounting part and configured for mounting at and demounting from the hand section, the claw part being further configured to grip a workpiece by an opening/closing action of the hand section in a mounted state at the hand section. This thereby enables the possibility that the hand section will be damaged or that the workpiece or peripheral environment will be damaged to be reduced, and enables high speed operation to be executed.

Moreover, the hand section may include a predisposed hand section configured without the first mounting/demounting part, and the first mounting/demounting part is configured for mounting at and demounting from the predisposed hand section. This enables application of the technology disclosed herein using a simple configuration to a robot including an existing hand section.

Moreover, a configuration may be adopted in which at least one of the first mounting/demounting part or the second mounting/demounting part includes an electromagnetic mounting/demounting mechanism, a mounting/demounting mechanism using suction, or a mounting/demounting mechanism in which an engaged state is achieved between the first mounting/demounting part and the second mounting/demounting part by external force being imparted in a specific direction. This thereby enables simple realization of a configuration in which the claw part is able to be autonomously mounted to or demounted from the hand section.

Moreover, a configuration may be adopted in which at least one out of the first mounting/demounting part or the second mounting/demounting part includes a resilient member configured to deform under external force and a measurement section configured to measure a deformation amount of the resilient member. This thereby enables the magnitude of external force received by the claw part to be detected as indicted by the deformation amount.

Moreover, a configuration may be adopted in which at least one of the hand section or the claw part includes a stopper that suppresses movement of the claw part with respect to the hand section in a direction of a shear force or a direction of a pressing reaction force generated between the hand section and the claw part when a gripping task is performed to grip the workpiece with the claw part mounted at the hand section. This thereby enables the claw part to be suppressed from coming away from the hand section due to the effect of shear force or pressing reaction force.

Moreover, a configuration may be adopted in which at least one of the hand section or the claw part includes a first guide at a position that is in the vicinity of a mounting position of the claw part at the hand section and that does not obstruct movement of the claw part. This thereby enables mounting of the hand section and the claw part in an exact positional relationship, and also enables the claw part to be suppressed from moving in an unwanted direction.

Moreover, a configuration may be adopted in which in a state prior to being mounted at the hand section, the claw part is disposed along a second guide provided at a position enabling mounting at and demounting from the hand section at a specific position and orientation. This thereby enables mounting of the claw part to the hand section to be performed both easily and exactly.

Moreover, a configuration may be adopted in which the robot further includes a control section configured to control driving of the robot arm and the hand section to mount the claw part at the hand section, and also so as to execute a task including gripping the workpiece with the claw part using the deformation amount measured by the measurement section.

Moreover, a configuration may be adopted in which the hand section is configured with three hand sections for gripping the workpiece from three directions in the same plane disposed at 120° intervals about a center of a grip position of the workpiece, and the control section is configured to estimate a tilt of the workpiece gripped by the hand section based on the deformation amount measured by the measurement section for each of the three hand sections, and control driving of the robot arm and the hand section so as to execute the task while correcting the tilt of the workpiece to horizontal. This thereby enables precise control to be performed.

Moreover, a configuration may be adopted in which the control section is configured to monitor the deformation amount measured by the measurement section, and to issue a warning that displacement has occurred in the mounting position of the claw part with respect to the hand section, in a case in which a difference between the deformation amount when the claw part grips the workpiece and the deformation amount after a sudden change has occurred in the deformation amount is a specific value or greater. This thereby enables detection of displacement of the claw part during mounting to the hand section.

Moreover, a configuration may be adopted in which the control section is configured to perform control to, in a state in which the workpiece is being gripped by the claw part, to move the claw part toward a work surface on which the workpiece has been placed until a change in the deformation amount is detected, in cases in which a change has been detected in the deformation amount, to execute a gripping action on the workpiece by the claw part at a position to which the claw part has been moved in a direction away from the work surface until a change in the deformation amount is no longer detected, and move the workpiece to a next work point in cases in which the deformation amount has changed by a specific value or greater. This thereby enables a position of a surface of a work stand to be recognized without using a sensor to recognize height.

Moreover, a robot control method according to the technology disclosed herein is a control method for a robot including a claw part and a hand section provided at a distal end of a robot arm and also including a first mounting/demounting part configured for mounting and demounting the claw part such that the claw part has a moveable range in a mounted state of the claw part, the claw part being provided with a second mounting/demounting part corresponding to the first mounting/demounting part and configured for mounting at and demounting from the hand section, the claw part being further configured to grip a workpiece by an opening/closing action of the hand section in a mounted state at the hand section, the method comprising a control section controlling driving of the robot arm and the hand section to mount the claw part at the hand section and also so as to execute a task including gripping the workpiece with the claw part.

Moreover, a robot control program according to the technology disclosed herein is a control program for a robot including a claw part and a hand section provided at a distal end of a robot arm and also including a first mounting/demounting part configured for mounting and demounting the claw part such that the claw part has a moveable range in a mounted state of the claw part, the claw part being provided with a second mounting/demounting part corresponding to the first mounting/demounting part and configured for mounting at and demounting from the hand section, the claw part being further configured to grip a workpiece by an opening/closing action of the hand section in a mounted state at the hand section, and a control section that controls driving of the robot arm and the hand section to mount the claw part at the hand section and also so as to execute a task including gripping the workpiece with the claw part, wherein the robot control program causes a computer to function as the control section.

The robot, robot control method, and robot control program according to the present disclosure enables the possibility that the hand section will be damaged or that the workpiece or peripheral environment will be damaged to be reduced, and enables high speed operation to be executed.

### BRIEF DESCRIPTION OF DRAWINGS

Fig. 1 is a schematic diagram illustrating a configuration of a robot.
Fig. 2 is a schematic diagram illustrating another configuration of a robot.
Fig. 3 is a diagram to explain another example of a mounting/demounting mechanism.
Fig. 4 is a block diagram illustrating a connection relationship between a control portion, a robot arm, and a sensor.
Fig. 5 is a block diagram illustrating a hardware configuration of a control section.
Fig. 6 is a diagram to explain an example of a stopper, a first guide, and a second guide.
Fig. 7 is a diagram to explain an example of a robot provided with three hand sections.
Fig. 8 is a diagram to explain a shear force and a pressing reaction force received by a claw part.
Fig. 9 is a diagram to explain an advantageous effect of a stopper.
Fig. 10 is a diagram illustrating an example of a stopper and a first guide.
Fig. 11 is a diagram illustrating an example of an arrangement of second guides.
Fig. 12 is a diagram to explain measurement of a deformation amount of a resilient member contained in a mounting/demounting mechanism.
Fig. 13 is a diagram to explain measurement of a deformation amount of a resilient member contained in another mounting/demounting mechanism.
Fig. 14 is a diagram to explain a case in which plungers are included in a mounting/demounting mechanism.
Fig. 15 is a diagram illustrating an example of an arrangement of plungers and measurement sections.
Fig. 16 is a diagram to explain insertion of a ring onto a shaft.
Fig. 17 is a diagram to explain a case of rotation of a ring for insertion onto a shaft.
Fig. 18 is a diagram to explain a task of inserting a ring onto a shaft.
Fig. 19 is a flowchart illustrating a flow of control processing of a robot of a third exemplary embodiment.
Fig. 20 is a diagram illustrating a timewise change in external force received by a claw part.
Fig. 21 is a flowchart illustrating a flow of control processing of a robot according to a fourth exemplary embodiment.
Fig. 22 is a diagram to explain a task envisaged in a fifth exemplary embodiment.
Fig. 23 is a diagram to explain monitoring of external force received by a claw part.
Fig. 24 is a flowchart illustrating a flow of control processing of a robot in a fifth exemplary embodiment.

### DESCRIPTION OF EMBODIMENTS

Description follows regarding an example of an exemplary embodiment of the present disclosure, with reference to the drawings. Note that configuration elements and portions that are the same or equivalent are appended with the same reference numerals in each of the drawings. Moreover, dimensions and proportions in the drawings are exaggerated for ease of explanation, and sometimes differ from actual proportions.

### First Exemplary Embodiment

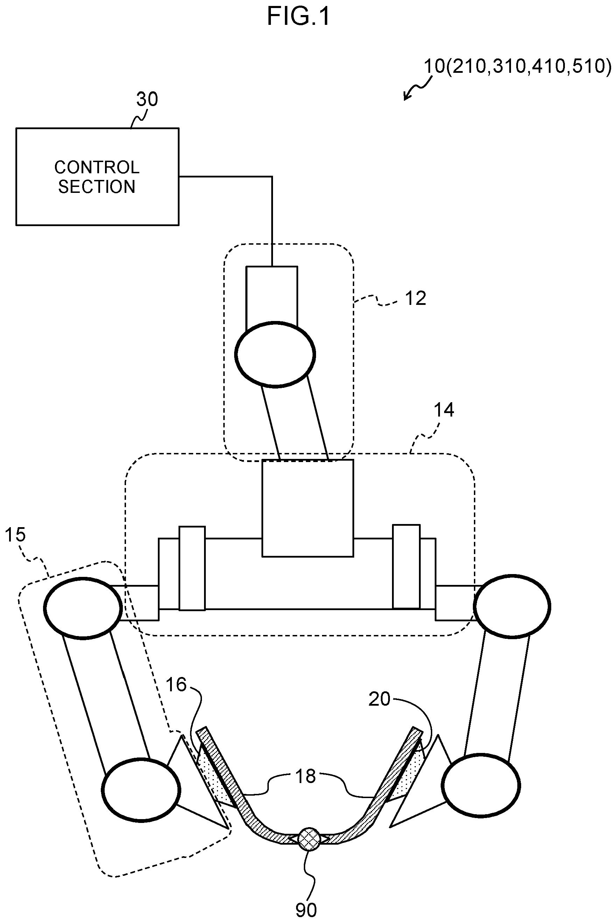

As illustrated in Fig. 1, a robot 10 according to the first exemplary embodiment includes a robot arm 12, a robot hand 14 provided at a distal end of the robot arm 12, plural finger parts 15 provided to the robot hand 14, a claw part 18 capable of mounting and demounting to the distal end of each of the finger parts 15, a sensor 26 (omitted from illustration in Fig. 1), and a control section 30. The robot arm 12, the robot hand 14, and the finger parts 15 are examples of a "hand section" of the present disclosure.

The robot arm 12, the robot hand 14, and the finger parts 15 are each configured including links, and joints that connect between the links and that also rotate or perform a linear motion extension or contraction under drive from a motor. The robot arm 12, the robot hand 14, and the finger parts 15 are each controlled such that the distal ends of the finger parts 15 adopt instructed positions in three-dimensional space and adopt instructed orientations by a motor being driven under control of the control section 30 so as to change the rotation angle or the extension/contraction state of the joints.

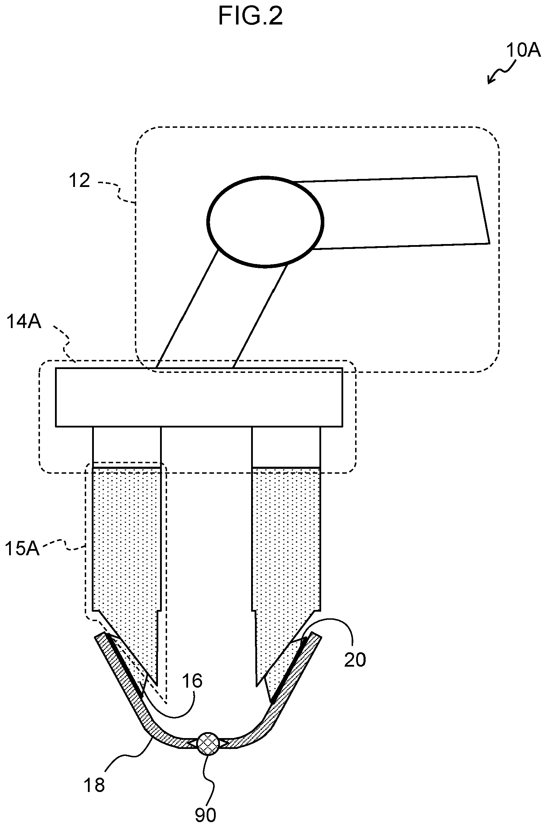

The distal ends of the finger parts 15 include first mounting/demounting parts 16 capable of mounting and demounting the claw parts 18 such that the claw parts 18 have a moveable range in a mounted state of the claw parts 18. Note that the first mounting/demounting parts 16 are not limited to being directly provided to the finger parts 15. For example, as illustrated in Fig. 2, a configuration may be adopted including an existing robot hand 14A lacking a first mounting/demounting part, and including finger parts 15A and first mounting/demounting parts 16A provided to the distal ends of the finger parts 15A that are capable of mounting and demounting to this existing robot hand 14A. Note that Fig. 2 illustrates an example of a robot 10A provided with a gripper robot hand 14A at the distal end of a robot arm 12, and finger parts 15A mounted to the gripper robot hand 14A.

Each of the claw parts 18 includes a second mounting/demounting part 20 corresponding to the first mounting/demounting part 16 and capable of mounting and demounting to the distal end of the finger part 15. The claw parts 18 are shaped to correspond to a target workpiece 90, and have a shape capable of gripping the target workpiece 90 by performing an opening/closing action of the distal ends of the finger parts 15 while in a state mounted to the distal ends of the finger parts 15.

At least one out of the first mounting/demounting parts 16 or the second mounting/demounting parts 20 is configured with an electromagnetic mounting/demounting mechanism, a mounting/demounting mechanism using suction, or a mounting/demounting mechanism in which the first mounting/demounting parts 16 and the second mounting/demounting parts 20 are placed in an engaged state by external force in a particular direction.

For example, the first mounting/demounting parts 16 may be configured so as to include suction pads made from a resilient member such as rubber, and a mechanism to suck air out from inside the suction pads. In such cases each of the second mounting/demounting parts 20 may be configured as a suction face for the suction pad to suction onto. By configuring the suction pads with the resilient member, the claw parts 18 suctioned onto the distal ends of the finger parts 15 by the suction pads have a range of movement with a suction position to the distal end of the finger part 15 as a rotation center.

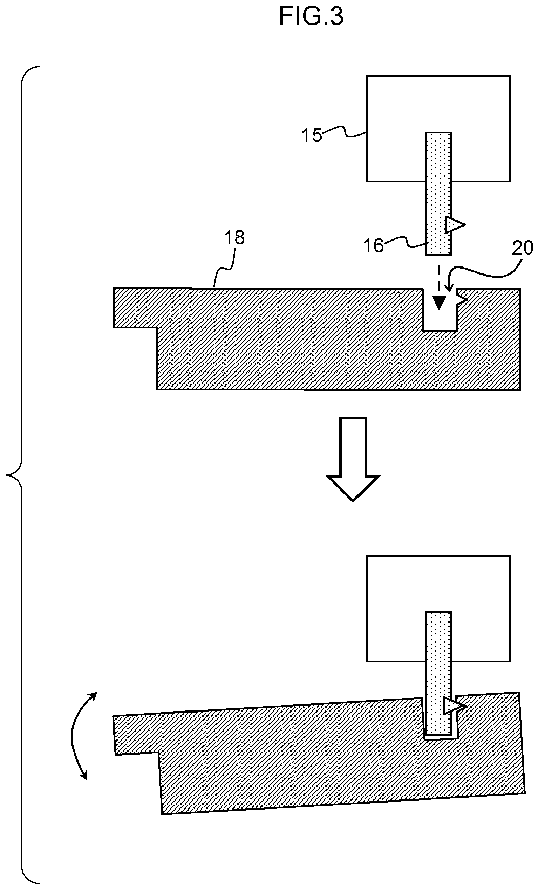

Moreover, as illustrated in Fig. 3, the first mounting/demounting parts 16 and the second mounting/demounting parts 20 may be configured with a knock-style ball pen type mechanism. Specifically, the first mounting/demounting parts 16 on the distal end side of the finger parts 15 each include a core rod and a portion to engage with the second mounting/demounting part 20. In Fig. 3 the engaging portion of the first mounting/demounting part 16 is schematically represented by a triangular shaped protrusion. Moreover, the second mounting/demounting parts 20 on the claw part 18 side are each configured including a hole portion for the core rod of the first mounting/demounting parts 16 to be inserted into, and including an engaging portion that is provided to the hole portion for the engaging portion of the first mounting/demounting part 16 to engage with. In Fig. 3 the engaging portion of the second mounting/demounting part 20 is schematically represented by a triangular indentation (notched portion). The core rod is inserted into the hole portion and the first mounting/demounting part 16 engages with the second mounting/demounting part 20 by the engaging portions engaging with each other and adopting a locked state. Moreover, when in an engaged state between the first mounting/demounting parts 16 and the second mounting/demounting parts 20, engagement between the first mounting/demounting parts 16 and the second mounting/demounting parts 20 is unlatched by release of the locked state of engagement between the engaging portions arising for example from the core rods being pressed into the hole portions. Moreover, the sizes and shapes of each of the core rods and each of the hole portions are configured such that a gap is present between the core rod and the hole portion in a state in which the core rod has been inserted into the hole portion. In this manner, as illustrated at the bottom of Fig. 3, in an engaged state between the first mounting/demounting parts 16 and the second mounting/demounting parts 20, the claw parts 18 mounted to the distal ends of the finger parts 15 are each configured with a range of movement with respect to the distal end of the finger part 15.

Note that although in Fig. 3 the engaging portions are illustrated schematically, a mechanism generally adopted in a knock-style ball pen type may be employed as the actual mechanism of engagement between the first mounting/demounting parts 16 and the second mounting/demounting parts 20. Moreover, a core rod and an engaging portion may be provided on the claw part 18 side as the second mounting/demounting part 20, and a hole portion and an engaging portion may be provided on the distal end side of the finger parts 15 as the first mounting/demounting part 16.

The mechanism of the first mounting/demounting parts 16 and the second mounting/demounting parts 20 are not limited to the above example. For example, a resilient magnet, electromagnetic coil, or the like may be employed as the first mounting/demounting part 16 and the second mounting/demounting part 20.

The sensor 26 measures information required for a task, such as the positional relationship between the claw parts 18 and the target workpiece 90 and peripheral environment, and outputs measurement values that have been measured to the control section 30. For example, the sensor 26 may include a camera to image the work area, and plural force sensors and the like provided to the robot hand 14, the finger parts 15, or both.

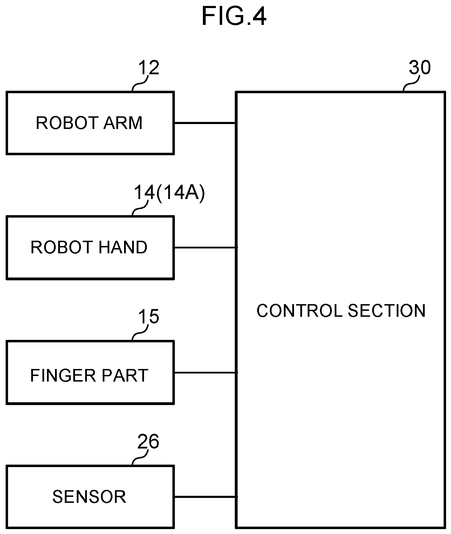

The control section 30 is, as illustrated in Fig. 4, respectively connected to the robot arm 12, the robot hand 14, the finger parts 15, and the sensor 26. The control section 30 controls driving of the robot arm 12, the robot hand 14, and the finger parts 15 based on the measurement values measured by the sensor 26, and by trajectories and the like of the distal ends of the finger parts 15 generated by direct teaching, path planning, a gripping plan, or the like. Specifically, the control section 30 controls actions of the robot arm 12, the robot hand 14, and the finger parts 15 so as to mount the claw parts 18 to the distal ends of the finger parts 15 and so as to execute tasks including gripping the target workpiece 90 with the claw parts 18. More specifically, the control section 30 computes the rotation angle or the extension/contraction of each of the joints of the robot arm 12, the robot hand 14, and the finger parts 15 required in order to implement the trajectories of the distal ends of the finger parts 15, and outputs the computed rotation angles or extensions/contractions as control values to the motors of each of the respective joints.

Note that in the case of the gripper type of robot 10A as illustrated in Fig. 2, the control section 30 outputs control values to the robot hand 14A to drive motors provided in the robot hand 14A in order to implement actions such an opening/closing action of the robot hand 14A.

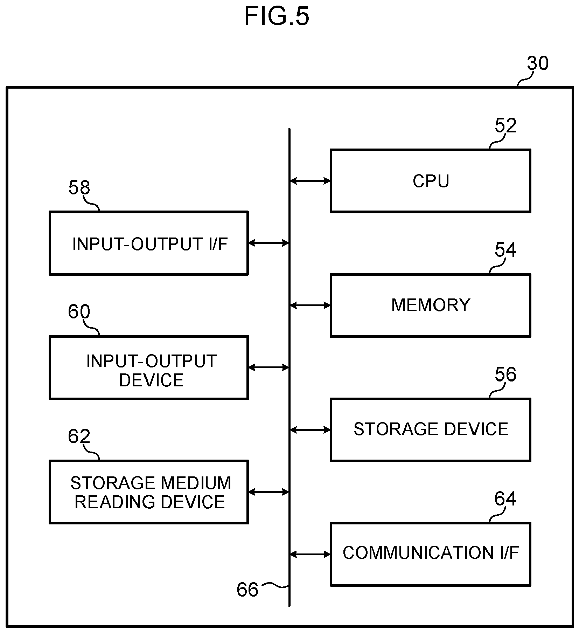

Fig. 5 is a block diagram illustrating a hardware configuration of the control section 30. As illustrated in Fig. 5, the control section 30 includes a central processing unit (CPU) 52, memory 54, a storage device 56, an input-output interface (I/F) 58, an input-output device 60, a storage medium reading device 62, and a communication I/F 64. Each configuration is connected so as to be able to mutually communicate through a bus 66.

A robot control program for executing robot control processing, described later, is stored in the storage device 56. The CPU 52 is a central processing unit for executing various programs and controlling each configuration. Namely, the CPU 52 reads the program from the storage device 56, and executes the program using the memory 54 as workspace. The CPU 52 controls each configuration and performs various computational processing according to the program stored on the storage device 56.

The memory 54 is configured by random access memory (RAM) and serves as workspace for temporarily storing programs and data. The storage device 56 is configured by a read only memory (ROM), and a hard disk drive (HDD), solid state drive (SSD), or the like, and stores various programs including an operating system and various data.

The input-output I/F 58 is an interface for connecting the robot arm 12, the robot hand 14, the finger parts 15, and the sensor 26 to the control section 30. The measurement values output from the sensor 26 are input to the control section 30 through the input-output I/F 58. Moreover, the control values computed by the control section 30 are output respectively to the robot arm 12, the robot hand 14, and the finger parts 15 through the input-output I/F 58. The input-output device 60 is, for example, an input device for performing various input, such as a keyboard, mouse, or the like, and an output device for performing output of various information, such as a display, printer, or the like. By adopting a touch panel display as the output device, this may also function as an input device.

The storage medium reading device 62 reads data stored on various storage media such as a compact disc (CD)-ROM, digital versatile disc (DVD)-ROM, Blu-ray disc, universal serial bus (USB) memory, or the like, and writes data to the storage media. The communication I/F 64 is an interface to communicate with other devices, and employs a standard such as, for example, Ethernet (registered trademark), FDDI, or Wi-Fi (registered trademark).

Next, description follows regarding operation of the robot 10 according to the first exemplary embodiment.

Prior to start of a task, the claw parts 18 are not mounted to the distal ends of the finger parts 15 and are, for example, placed in a specific position and orientation on a specific work stand. The control section 30 executes the robot control program so as to output control values such as the rotation angles of the joints of the robot arm 12, the robot hand 14, and the finger parts 15 to the robot arm 12, the robot hand 14, and the finger parts 15, respectively. First the robot arm 12, the robot hand 14, and the finger parts 15 move the distal ends of the finger parts 15 to above the claw parts 18 placed on the work stand, lower the distal ends of the finger parts 15 down toward the claw parts 18, and mount the claw parts 18 on the distal ends of the finger parts 15. Specifically, in cases in which the first mounting/demounting parts 16 and the second mounting/demounting parts 20 configure a mechanism employing suction pads, the control section 30 moves the robot arm 12, the robot hand 14, and the finger parts 15 so as to press the suction pads of the first mounting/demounting parts 16 against the suction face that is the second mounting/demounting parts 20, and suctions out air from inside the suction pads. Moreover, in cases in which the first mounting/demounting parts 16 and the second mounting/demounting parts 20 configure a knock-style ball pen type mechanism, the control section 30 presses the core rods of the first mounting/demounting parts 16 into the hole portions of the second mounting/demounting parts 20 until the engaging portions thereof are engaged with each other.

When the claw parts 18 have been mounted to the distal ends of the finger parts 15, the control section 30 controls driving of the robot arm 12, the robot hand 14, and the finger parts 15 so as to move the distal ends of the finger parts 15 to the position of the workpiece 90, and such that the claw parts 18 grip the workpiece 90. The control section 30 then controls driving of the robot arm 12, the robot hand 14, and the finger parts 15 such that the gripped workpiece 90 is placed at a specific position and an action is executed, such as attaching to another workpiece.

As explained above, the robot according to the first exemplary embodiment is able to autonomously mount the claw parts to the distal ends of the finger parts, and the claw parts mounted to the distal ends of the finger parts have a moveable range. The mechanism for mounting/demounting the claw part to/from the distal ends of the finger parts may be a suction mechanism, an electromagnetic mechanism, a knock-style ball pen type mechanism, or the like. This enables the claw parts corresponding to the workpiece to be switched over on the distal ends of the finger parts using a compact sized and simply mechanism, enabling a flexible approach to be adopted compatible to gripping the various shapes and orientations of workpieces. Moreover, there is no need to provide a separate mounting/demounting mechanism for a robot including finger parts capable of suctioning and gripping a workpiece.

Due to the above advantageous effects, a user is able to automate assembly of a product configured from various components with a good value robot installation having high productivity. Moreover, due to it being sufficient to provide the simply configured mounting/demounting mechanism to at least one out of the finger parts or the claw parts, a user is able to utilize claw parts produced with a short lead time using a 3D printer or the like. Furthermore, producing the claw parts specialized for each task enables tasks to be executed that would be unable to be executed with ordinary flat claw parts for which fitting to the target or the like is difficult.

### Second Exemplary Embodiment

Next, description follows regarding a second exemplary embodiment. Note that the same reference numerals will be appended to the robot in the second exemplary embodiment to configuration the same as that of the robot 10 according to the first exemplary embodiment, and detailed explanation thereof will be omitted.

As illustrated in Fig. 1, a robot 210 according to the second exemplary embodiment is similar to the robot 10 according to the first exemplary embodiment, and includes a robot arm 12, a robot hand 14, finger parts 15, claw parts 18, a sensor 26 (omitted from illustration in Fig. 1), and a control section 30.

In the robot 210 according to the second exemplary embodiment, at least one out of the finger parts 15 or the claw parts 18 is provided with a stopper to suppress movement of the claw parts 18 with respect to the finger parts 15 in a direction of shear force or a direction of pressing reaction force generated between the finger parts 15 and the claw parts 18 when performing a task to grip the workpiece 90 with the claw parts 18 mounted to the distal ends of the finger parts 15. Moreover, at least one out of the finger parts 15 or the claw parts 18 is provided with a first guide at a position that is at the vicinity of the mounting position of each of the claw parts 18 to the distal end of the finger part 15 and is a position that does not impede movement of the claw part 18. Furthermore, in a state prior to the claw part 18 being mounted to the distal end of the finger part 15, the distal end of the finger part 15 is disposed along a second guide provided at a position enabling mounting of the claw parts 18 at a specific position and orientation.

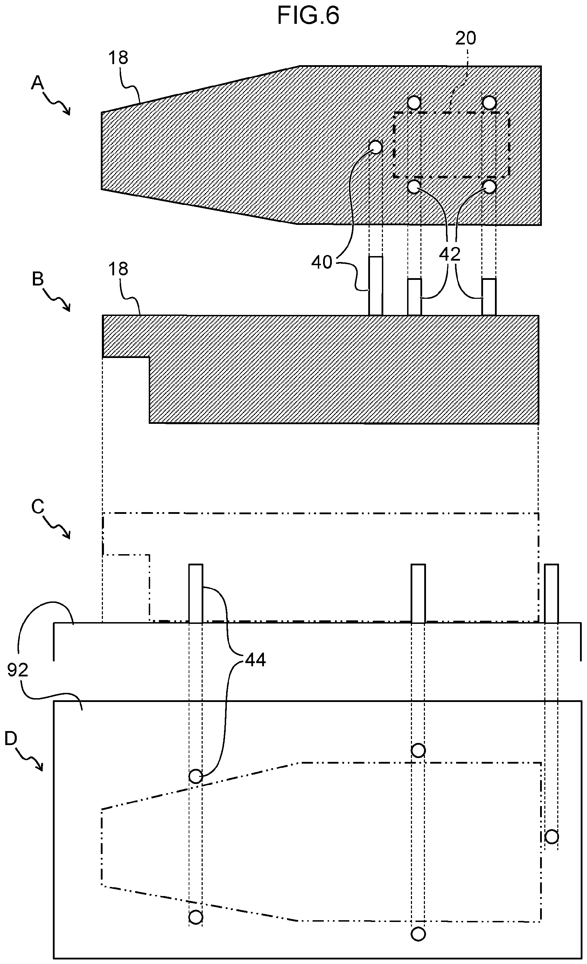

Explanation follows regarding an example of the stopper, the first guide, and the second guide, with reference to Fig. 6. The example in Fig. 6 illustrates a case in which a stopper 40 and first guides 42 are provided on the claw part 18 side. A in Fig. 6 is a plan view looking at one of the claw parts 18 from above, B in Fig. 6 is a side view of the claw part 18, C in Fig. 6 is a side view of a work stand 92 provided with second guides 44, and D in Fig. 6 is a plan view looking at the work stand 92 from above.

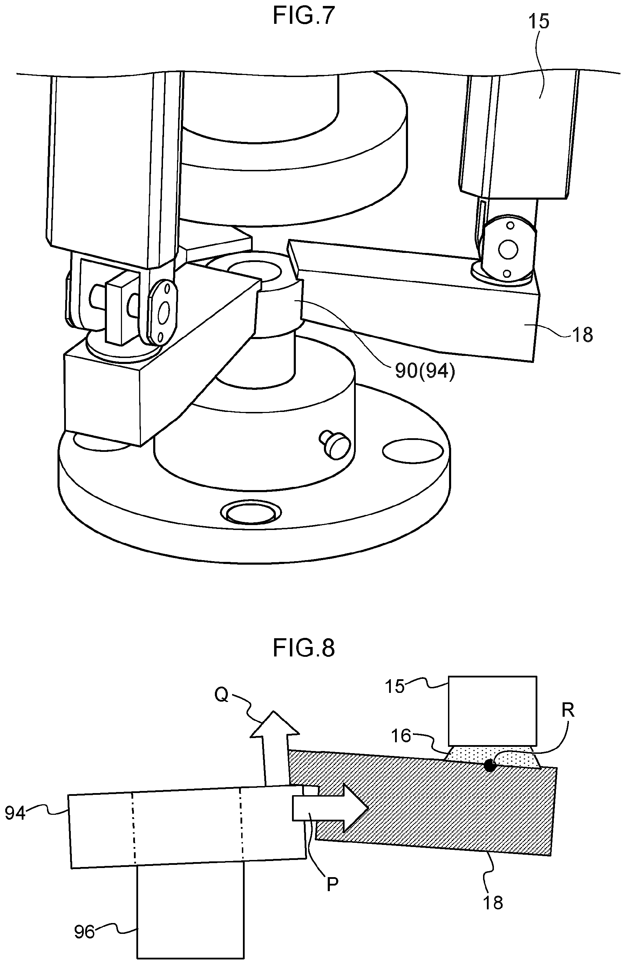

For example consider a case in which, as illustrated in Fig. 7, the robot 210 is configured including three finger parts 15 for gripping the workpiece 90 from three directions in the same plane, with the finger parts 15 arranged at 120° intervals centered on the workpiece 90. Suppose there is a task in which the three finger parts 15 mounted with the claw parts 18 grip a ring shaped workpiece 90 so as to press inward from a circular peripheral side toward the center, so as to insert the workpiece 90 onto a shaft.

In such a case, the three finger parts 15 grip the ring shaped workpiece 90 (hereafter sometimes also referred to as "ring 94") so as to press inward toward the center, and as illustrated in Fig. 8, a shear force P on the claw parts 18 is generated from the ring 94. When the shear force P is generated, the claw parts 18 are liable to come away from the first mounting/demounting parts 16 (for example suction pads). Moreover, a pressing reaction force Q on the claw parts 18 is generated from the ring 94 when the ring 94 is being inserted onto a shaft 96. When the pressing reaction force Q is generated, the claw part 18 rotates about a rotation center R of the mounting position of the claw part 18 to the distal end of the finger part 15, and excessive force acts on the first mounting/demounting parts 16. This results in, for example, the suction pad being deformed excessively when the first mounting/demounting part 16 is configured by a suction pad.

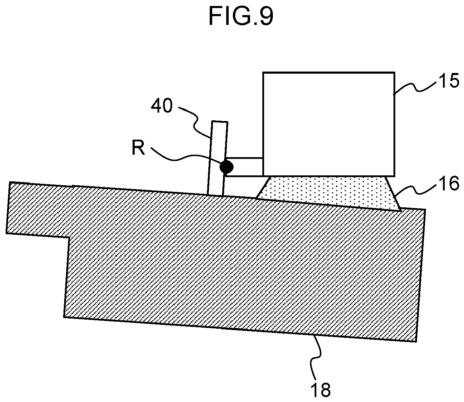

In order to address this issue, as illustrated in Fig. 6 and Fig. 9, the stopper 40 is provided at a position that is in the vicinity of the second mounting/demounting part 20 (suction face, hole portion with core rod inserted therein, or the like), and that contacts the finger part 15 or projection portion provided to the finger part 15 when the claw part 18 has moved with respect to the distal end of the finger part 15. The stopper 40 may, for example, be a component having a pin shape or a plate shape. The shear force P generated on the claw parts 18 is suppressed thereby. Moreover, as illustrated in Fig. 9, force due to the pressing reaction force Q acting on the first mounting/demounting parts 16 can be alleviated using the principle of a lever when a rotation center R of the claw part 18 arrives at a contact position of the stopper 40 against the finger part 15 or a projection portion provided to the finger part 15.

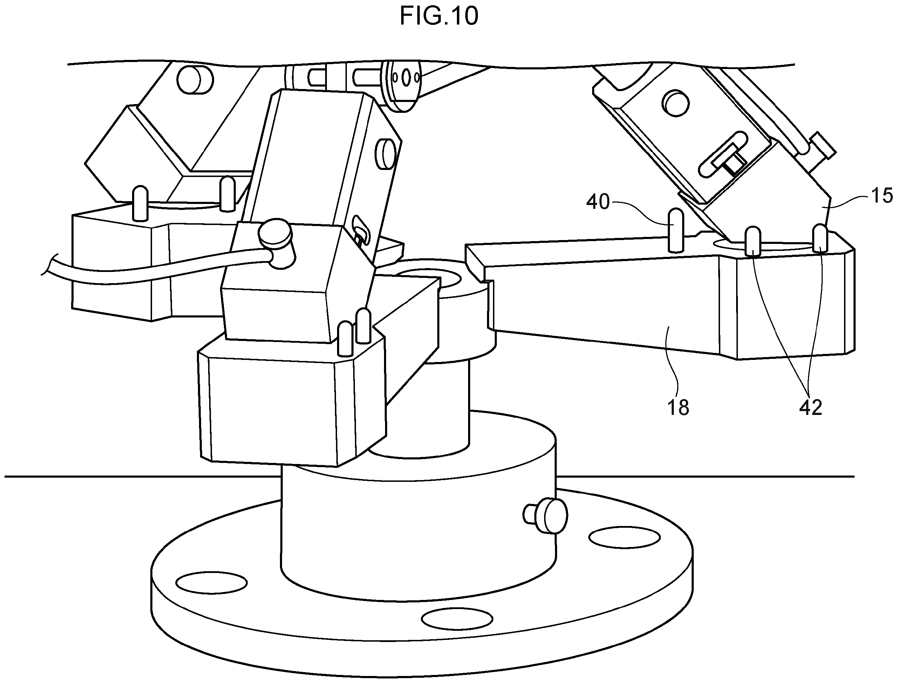

Moreover, as illustrated at A and B in Fig. 6, the first guide 42 is provided at a position that is in the vicinity of the second mounting/demounting parts 20 (suction faces, hole portions with core rods inserted therein, or the like), and that is along the width of the finger parts 15. The first guide 42 may be plural pin shaped components and may be a plate shaped component. Moreover, the first guide 42 is provided at a position that does not impede movement of the claw parts 18. For example, the example of Fig. 6 is an example in which, at a mounted location of the claw part 18 to the distal end of the finger part 15, the claw part 18 is moveable in a rotation direction with a rotation axis of the short axis direction of the claw parts 18. This means that the first guide 42 is disposed at a position that is parallel to the long axis direction of the claw parts 18 and that is along the face of the finger parts 15. Fig. 10 illustrates an example of the stopper 40 and the first guide 42.

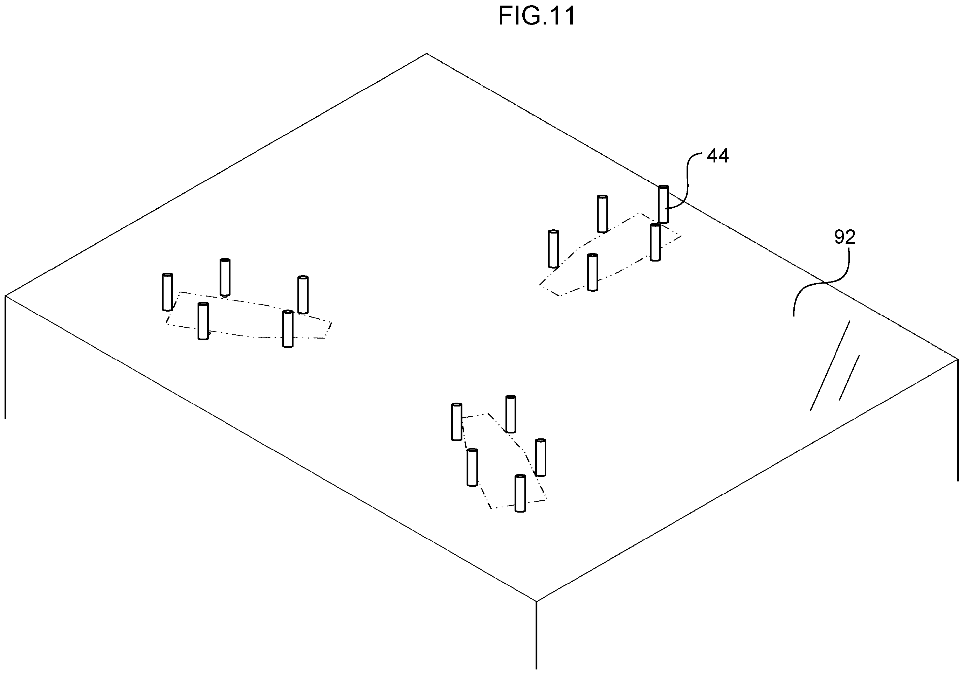

Moreover, as illustrated at C and D of Fig. 6, the second guides 44 are disposed at positions capable of positioning the claw part 18 on the work stand 92. The second guides 44 may be plural pin shaped components and may be a plate shaped component. For example, in cases in which there are three finger parts 15 arranged at 120° intervals as illustrated in Fig. 7, placing the claw parts 18 on the work stand 92 at positions and orientations corresponding to this arrangement results in easy and exact mounting of the claw parts 18 to the distal ends of the finger parts 15. Fig. 11 illustrates an example of the second guides 44 on the work stand 92 in such a case. In the example of Fig. 11, prior to being mounted to the distal ends of the finger parts 15, the claw parts 18 are arranged in regions (the single-dot broken line portions in Fig. 11) surrounded by the second guides 44.

Next, description follows regarding operation and advantageous effects of the robot 210 according to the second exemplary embodiment. Note that detailed explanation will be omitted for similar points to those of the operation and advantageous effects of the robot 10 according to the first exemplary embodiment.

The claw parts 18 are each arranged along the second guides 44 on the work stand 92 prior to start of a task. The control section 30 drives the robot arm 12, the robot hand 14, and the finger parts 15 by executing a robot control program so as to mount the claw parts 18 to the distal ends of the finger parts 15. When doing so, the control section 30 moves the finger parts 15 so as to move along the first guide 42 provided to the claw parts 18, and mounts the claw parts 18. During a task in which the workpiece 90 is gripped by the claw part 18, the effect on the claw part 18 arising from shear force or pressing reaction force generated from the workpiece 90 is suppressed when the finger part 15 or the projection portion provided to the finger part 15 has contacted the stopper 40.

As described above, the robot according to the second exemplary embodiment includes the stopper at the position to make contact between the distal end of the finger part and the claw part when the claw part has been moved. This enables the effect from the shear force to be suppressed, enables the claw part to be prevented from coming away from the distal end of the finger part, and also enables suppression of excessive deformation of the first mounting/demounting part, such as a suction pad or the like, due to the pressing reaction force.

Moreover, the robot according to the second exemplary embodiment includes the first guide at a position that is at the vicinity of the mounting position between the distal end of the finger part and the claw part and that is a position not impeding movement of the claw part. This enables the mounting to be performed with an exact positional relationship between the distal end of the finger part and the claw part, and also enables the claw part to be suppressed from moving in an unwanted direction.

Moreover, the second exemplary embodiment is provided with the second guides to hold the claw parts in specific positions and orientations on the work stand where the claw parts are placed prior to being mounted to the distal ends of the finger parts. This means that mounting of the claw parts to the distal ends of the finger parts can be performed both easily and exactly. In particular, although in cases in which light claw parts of small size are employed there is a high possibility that the claw parts might be displaced from specific positions and orientations by slight forces when mounting/demounting the claw parts, displacement from the positions and orientations of the claw parts on the work stand can be suppressed by the second guides.

Note that although a case has been described in the second exemplary embodiment including all components of the stopper, the first guide, and the second guide, there is no limitation thereto. The stopper, the first guide, and the second guide function independently of each other.

### Third Exemplary Embodiment

Next, description follows regarding a third exemplary embodiment. Note that the for a robot in the third exemplary embodiment the same reference numerals will be appended to similar configuration to that of the robot 10 according to the first exemplary embodiment, and detailed explanation thereof will be omitted.

Similarly to the robot 10 according to the first exemplary embodiment and as illustrated in Fig. 1, a robot 310 according to the third exemplary embodiment, includes a robot arm 12, a robot hand 14, finger parts 15, claw parts 18, a sensor 26 (omitted from illustration in Fig. 1), and a control section 30.

In the robot 310 according to the third exemplary embodiment, at least one out of the first mounting/demounting parts 16 or the second mounting/demounting parts 20 includes a resilient member that deforms under external force, and a measurement section to measure a deformation amount of the resilient member. The deformation amount of the resilient member is a value that corresponds to the external force received by the claw part 18.

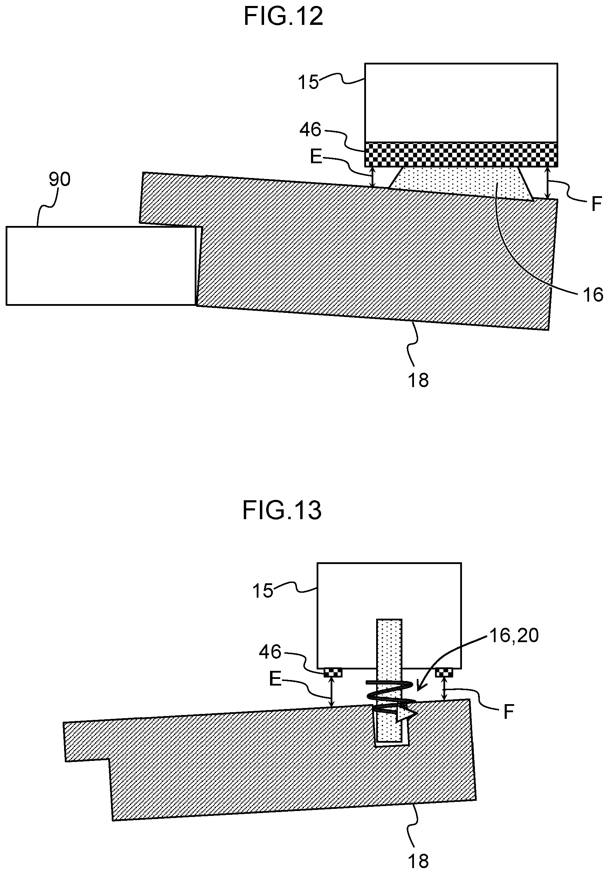

For example, as illustrated in Fig. 12, the first mounting/demounting parts 16 may each be a suction pad configured from a resilient member such as rubber, and measurement sections 46 may each be configured from a proximity sensor for measuring an amount of strain of the suction pad. Fig. 12 illustrates a deformation amount of the resilient member as expressed by a difference in the length of arrow E and arrow F. Similar applies in Fig. 13 described later.

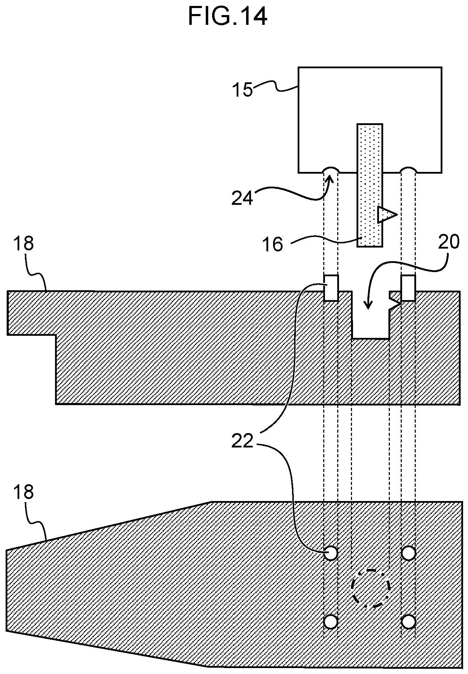

Moreover, for example as illustrated in Fig. 13, the first mounting/demounting part 16 and the second mounting/demounting part 20 may be configured by a knock-style ball pen type mechanism, and the measurement section 46 may be configured from a proximity sensor such as a photo-reflector for measuring a distance at plural locations between the robot hand 14 and the claw parts 18. A more specific mechanism for such a case is illustrated in Fig. 14. As illustrated in Fig. 14, plungers 22 are provided in the vicinity of a hole portion of the second mounting/demounting part 20. Moreover, indentations 24 for insertion of a ball or pin that is projected out from the distal end of each of the plungers 22 by a spring in-built into the plunger 22 and inserted therein are provided in the vicinity of a core rod of the first mounting/demounting part 16 of each of the finger parts 15. Such a case is an example in which a spring in-built into the plunger 22 serves as an example of the resilient member. Note that the position and number of the plungers 22 and the indentations 24 provided are not limited to as in the example of Fig. 14. Moreover, a configuration may be adopted in which the plungers 22 are provided on the finger part 15 side and the indentations 24 are provided on the claw part 18 side.

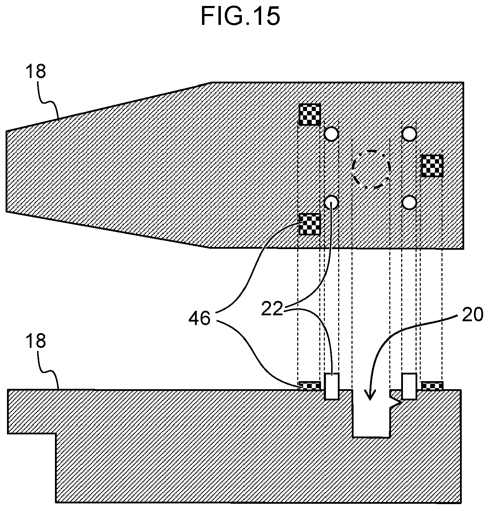

Fig. 15 illustrates an example of an arrangement of the plungers 22 and the measurement sections 46 (proximity sensors). The measurement sections 46 and the plungers 22 are preferably disposed at an equidistance from a center of the hole portion of each of the second mounting/demounting parts 20. Furthermore, preferably an arrangement is adopted such that all the distances between the measurement sections 46 are the same as each other and all the distances between the plungers 22 are the same as each other. A configuration may be adopted in which a size of at least one out of the core rod of the first mounting/demounting part 16 or the hole portion of the second mounting/demounting part 20 is decided according to a spring constant of the plunger 22, and a size of a gap between the core rod and the hole portion is adjusted such that the claw part 18 is moveable according to the degrees of freedom of the plunger 22. Moreover, the sensitivity of the measurement sections 46 may be adjusted by the spring constant of the plungers 22.

Moreover, in the robot 310 according to the third exemplary embodiment, the three finger parts 15 are arranged at 120° intervals as illustrated in Fig. 7.

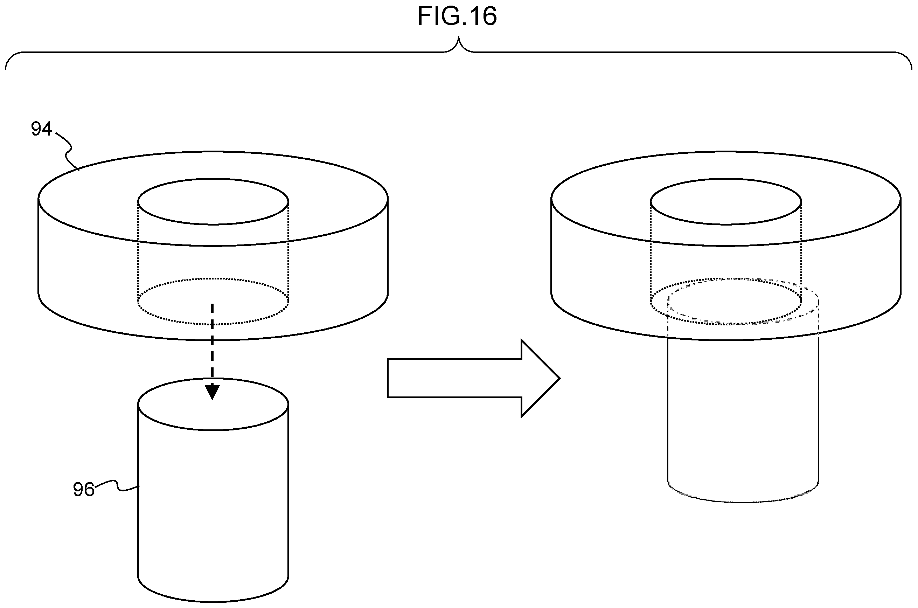

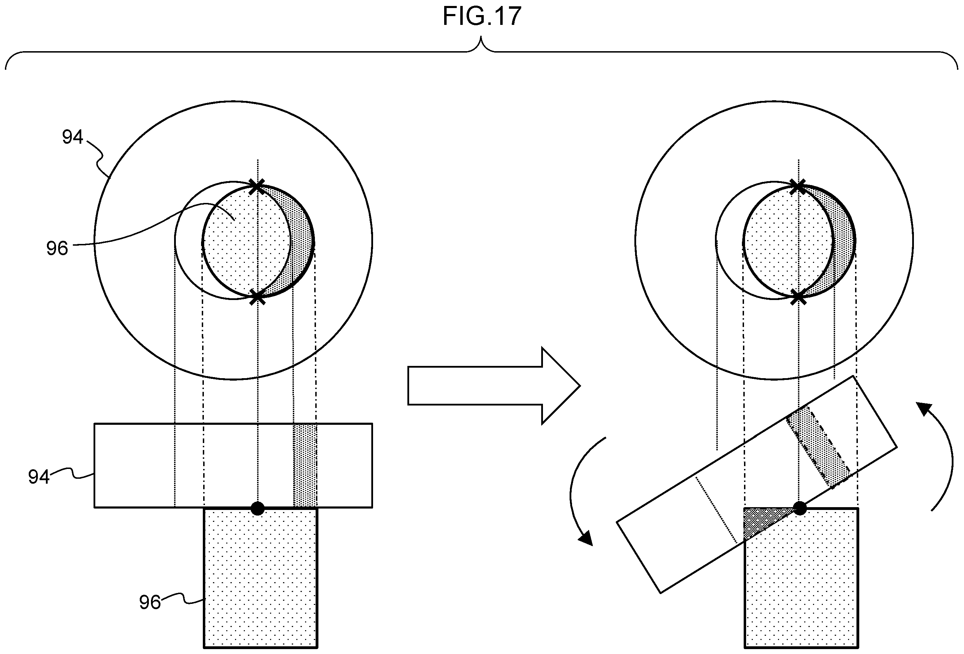

The control section 30 estimates a tilt of the workpiece 90 gripped by the claw parts 18 mounted to the distal ends of the finger parts 15 based on deformation amounts measured by the measurement sections 46 for the three finger parts 15. For example consider a task in which, as illustrated on the left of Fig. 16, a ring 94 is gripped by claw parts 18, and the ring 94 is inserted onto a shaft 96. In such cases sometimes the hole of the ring 94 is not aligned with the shaft 96, as illustrated on the right of Fig. 16. In such cases, as illustrated in Fig. 17, the ring 94 is rotated about a rotation axis (illustrated by the black circles in Fig. 17) of a line connecting together boundary points of a contact region between the ring 94 and the shaft 96 (illustrated by crosses in Fig. 17). The larger the positional displacement between the hole of the ring 94 and the shaft 96, the larger the room for rotation. Note that a plan view looking down on the ring 94 and the shaft 96 from above is illustrated at the top of Fig. 17, and a side view thereof is illustrated at the bottom of Fig. 17.

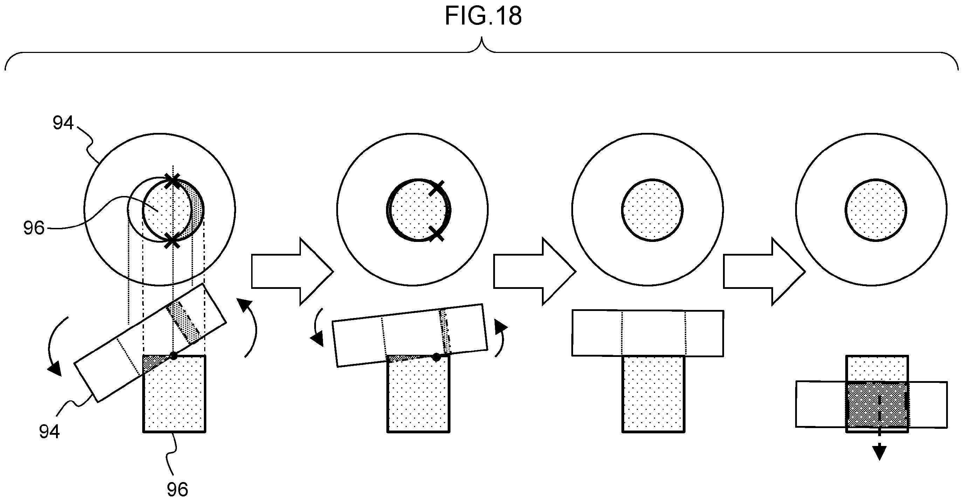

The control section 30 may, for example, estimate that the ring 94 is tilted when a difference arises between the deformation amounts measured by the measurement sections 46 corresponding to the respective claw parts 18, namely when a difference arises between the external force received by each of the claw parts 18. The control section 30 corrects so as to make the ring 94 horizontal. For example, the control section 30 controls the robot arm 12, the robot hand 14, and the finger parts 15 in the directions to correct the tilt of the ring 94 such that the deformation amounts corresponding to the respective claw parts 18 become equal values. Thereby, as illustrated in Fig. 18, the tilt of the ring 94 is corrected passively under mechanical constraints as the center of the ring 94 and the center of the shaft 96 are aligned. The control section 30 continues to apply force in a downward direction so as to, for example, enable insertion of the ring 94 while the robot arm 12, the robot hand 14, and the finger parts 15 are being moved in directions to correct the tilt of the ring 94. This accordingly enables the center of the ring 94 and the center of the shaft 96 to be aligned, and the ring 94 to be inserted onto the shaft 96.

Next, description follows regarding operation and advantageous effects of the robot 310 according to the third exemplary embodiment. Note that detailed explanation will be omitted for points similar to those of the operation and advantageous effects of the robot 10 according to the first exemplary embodiment.

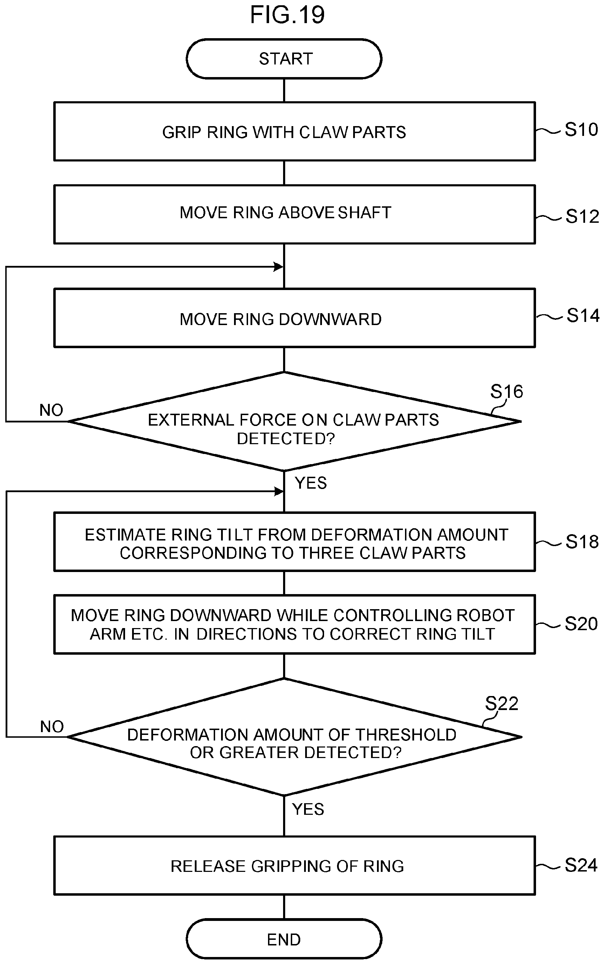

The control section 30 drives the robot arm 12, and the claw parts 18 are mounted to the distal ends of the finger parts 15. The CPU 52 then reads the robot control program from the storage device 56, and executes robot control processing by expanding and executing the robot control program in the memory 54. Fig. 19 is a flowchart illustrating a flow of the robot control processing executed by the CPU 52 of the control section 30.

At step S10, the control section 30 causes the ring 94 to be gripped by the three claw parts 18. Then at step S12, the control section 30 moves the ring 94 above the shaft 96 based on information recognized in images imaged by a camera installed to an upper portion of the work area. Next at step S14, the control section 30 moves the ring 94 downward.

Next at step S16, the control section 30 acquires deformation amounts of the resilient members corresponding to the respective claw parts 18 as measured by the measurement sections 46 corresponding to the respective claw parts 18, and determines whether or not an external force on the claw parts 18 has been detected by determining whether or not the deformation amounts have changed. This is performed in order to determine whether or not the ring 94 has contacted the shaft 96. Processing transitions to step S18 when external force on the claw parts 18 has been detected, and processing returns to step S14 when not detected.

At step S18, the control section 30 estimates tilt of the ring 94 by whether or not a difference has arisen in the deformation amounts as measured by the measurement sections 46 corresponding to each of the claw parts 18. Next at step S20, the control section 30 inserts the ring 94 onto the shaft 96 by moving the ring 94 downward while controlling the robot arm 12, the robot hand 14, and the finger parts 15 in directions to correct the tilt of the ring 94 such that the deformation amounts corresponding to the respective claw parts 18 become equal.

Next at step S22, the control section 30 determines whether or not the deformation amounts measured by the measurement sections 46 corresponding to the respective claw parts 18 have been detected at a specific threshold or greater. This is performed in order to determine whether or not insertion of the ring 94 gripped by the claw parts 18 onto the shaft 96 is complete and the ring 94 has reached a specific position on the work stand or the like. Processing transitions to step S24 when deformation amounts of the threshold or greater have been detected, and processing returns to step S18 when not detected. At step S24, the control section 30 releases gripping of the ring by the claw parts 18, and ends the robot control processing.

As described above, the robot according to the third exemplary embodiment at least one out of the first mounting/demounting parts or the second mounting/demounting parts includes a resilient member that changes under external force, and a deformation amount of the resilient member is measured. This thereby enables the magnitude of external force received by the claw part to be detected. Moreover, a smaller external force can be detected than in a method in which external force is detected using force sensors inserted at portions between the robot arm and the robot hand, thereby enabling noise in the measurement values to be suppressed.

Moreover, the robot according to the third exemplary embodiment is configured including the three finger parts arranged at 120° intervals, and measures the deformation amount of the resilient member provided to at least one out of the first mounting/demounting parts or the second mounting/demounting parts corresponding to the claw parts. This enables tilt of a workpiece being gripped by the claw parts to be estimated from the relative magnitude of external forces received by each of the claw parts, and enables precise control to be performed by controlling the robot arm, robot hand, and finger parts in the directions to correct this tilt.

### Fourth Exemplary Embodiment

Next, description follows regarding a fourth exemplary embodiment. Note that in a robot according to the fourth exemplary embodiment, the same reference numerals will be appended to similar configuration to that of the robot 310 according to the third exemplary embodiment, and detailed explanation thereof will be omitted.

Similarly to the robot 10 according to the third exemplary embodiment and as illustrated in Fig. 1, the robot 410 according to the fourth exemplary embodiment includes a robot arm 12, a robot hand 14, finger parts 15, claw parts 18, a sensor 26 (omitted from illustration in Fig. 1), and a control section 30. In the robot 410 according to the fourth exemplary embodiment, at least one of first mounting/demounting parts 16 or the second mounting/demounting parts 20 includes a resilient member that deforms under external force, and a measurement section 46 to measure a deformation amount of the resilient member. Note that the robot 410 according to the fourth exemplary embodiment is not limited to a configuration including three finger parts 15 arranged at 120° intervals as in the robot 310 according to the third exemplary embodiment.

The control section 30 monitors the deformation amounts measured by the measurement sections 46, and issues a warning that a displacement has occurred in the mounting position of the claw parts 18 with respect to the distal ends of the finger parts 15 when there is a difference of a specific threshold or greater between the deformation amounts at the point in time when the claw parts 18 was gripped the workpiece 90 and the deformation amounts after sudden change occurred in the deformation amounts.

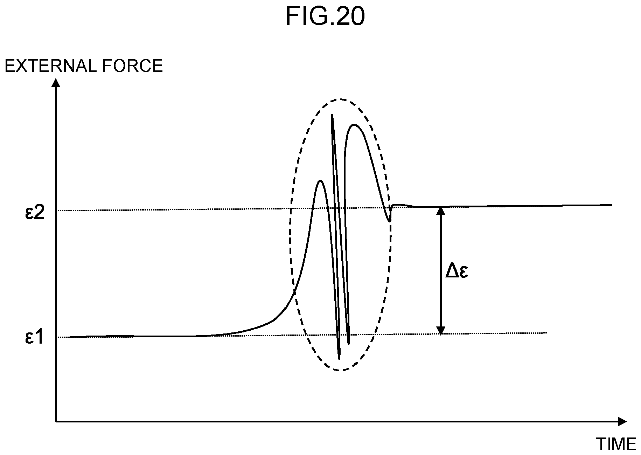

Specifically, as illustrated in Fig. 20, the control section 30 stores the deformation amounts at each time for a duration that the workpiece 90 is being gripped by the claw parts 18, namely stores external force acting on the claw parts 18. The external force at the point in time when the workpiece 90 was gripped by the claw parts 18 is ε1. A sudden change in the external force measured, as illustrated by the broken line portion in Fig. 20, appears in cases in which a task is performed so as to cause the workpiece 90 to contact another workpiece while in a gripped state of the workpiece 90, and cases in which part of the robot 410 has contacted an obstacle. Then when contact with another workpiece, obstacle, or the like is subsequently released, external force acting on the claw parts 18 would normally return to a value the same as ε1. However, when a displacement occurs in the mounting position of the claw parts 18 to the distal ends of the finger parts 15, then there is a change in the external force acting on the claw parts 18 due to a change in the rotation center of motion of the claw parts 18. This means that, in cases in which there has been a sudden change from a state in which the external force ε1 acted on the claw parts 18, the control section 30 computes a difference Δε between external force ε2 after the sudden change and ε1, and determines that displacement has occurred in the mounting position of the claw parts 18 with respect to the distal ends of the finger parts 15 when Δε is a specific threshold εₜₕ or greater.

When displacement has occurred in the mounting position, the control section 30 issues a warning by displaying a warning message on a display device for example, by outputting an audio warning message, by outputting a warning tone such as a beep, or the like.

Next, description follows regarding operation and advantageous effects of the robot 410 according to the fourth exemplary embodiment. Note that detailed explanation will be omitted for points similar to those of the operation and advantageous effects of the robot 310 according to the third exemplary embodiment.

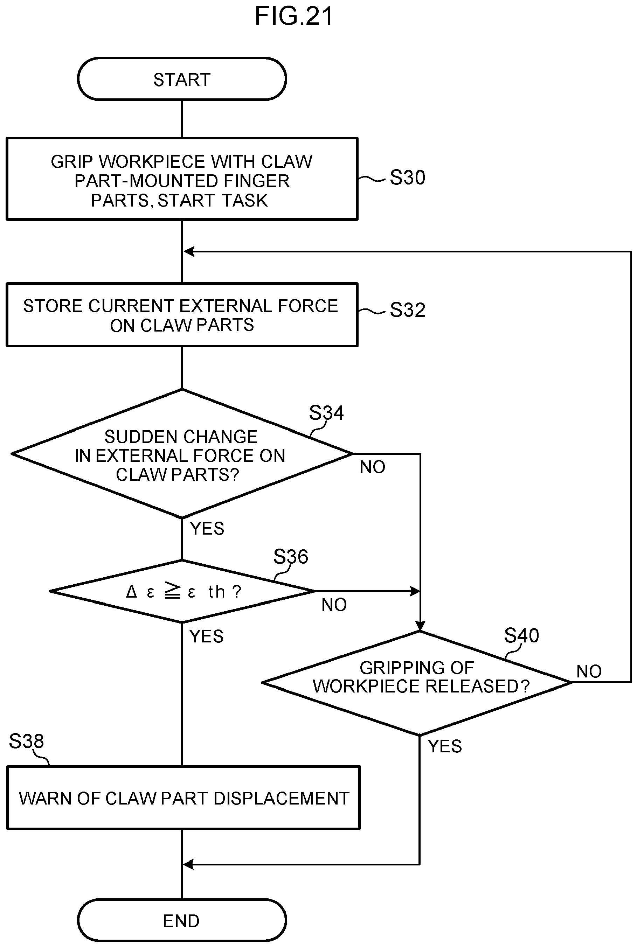

The control section 30 drives the robot arm 12 and mounts the claw parts 18 on the distal ends of the finger parts 15. The CPU 52 then reads the robot control program from the storage device 56, and executes robot control processing by expanding and executing the robot control program in the memory 54. Fig. 21 is a flowchart illustrating a flow of the robot control processing executed by the CPU 52 of the control section 30.

At step S30, the control section 30 grips a workpiece 90 using the finger parts 15 mounted with the claw parts 18 and starts a specific task. Next at step S32, the control section 30 acquires from the measurement sections 46 respective deformation amounts of the resilient members provided to at least one out of the first mounting/demounting parts 16 or the second mounting/demounting parts 20, namely acquires external forces acting on the claw parts 18, and stores these in a specific storage region. ε1 is the external force immediately after the workpiece 90 has been gripped by the claw parts 18.

Next at step S34, the control section 30 determines whether or not there has been a sudden change in the external force acting on the claw parts 18. For example, the control section 30 may determine that there has been a sudden change in the external force such as in cases in which an external force has been measured having a difference to the external force ε1 of a specific value or greater, in cases in which a difference between the minimum value and the maximum value of the external force in a specific period of time is a specific value or greater, or the like. Processing transitions to step S36 when there has been a sudden change in the external force, and processing transitions to step S40 when a sudden change in the external force has not occurred.

At step S36, the control section 30 computes a difference Δε between the external force ε2 when in a fixed state after the sudden change in the external force, and ε1. The control section 30 then determines whether or not the Δε is the specific threshold εₜₕ or greater. Processing transitions to step S38 when Δε ≥ εₜₕ, processing transitions to step S40 when Δε < εₜₕ.

At step S38, the control section 30 warns that displacement has occurred in the mounting position of the claw parts 18 with respect to the distal ends of the finger parts 15, and ends the robot control processing. At step S40, the control section 30 determines whether or not gripping of the workpiece 90 by the claw parts 18 has been released. Processing returns to step S32 when the gripped state of the workpiece 90 is continuing, and the robot control processing is ended when gripping of the workpiece 90 has been released.

As described above, the robot according to the fourth exemplary embodiment monitors the deformation amount of the resilient member provided to at least one out of the first mounting/demounting parts or the second mounting/demounting parts in a gripped state of the workpiece, namely monitors the external force received by the claw parts. Then in cases in which there has been a sudden change in the external force irrespective of there being no change to the gripped state, determination is made as to whether or not displacement has occurred in the mounting position of the claw parts with respect to the distal ends of the finger parts based on the difference in external force between before and after this sudden change. This thereby enables displacement of the claw parts during mounting to the distal ends of the finger parts to be detected.

### Fifth Exemplary Embodiment

Next, description follows regarding a fifth exemplary embodiment. Note that in the robot according to the fourth exemplary embodiment, the same reference numerals will be appended to similar configuration to that of the robot 310 according to the third exemplary embodiment, and detailed explanation thereof will be omitted.

Similarly to in the robot 10 according to the third exemplary embodiment and as illustrated in Fig. 1, a robot 510 according to the fifth exemplary embodiment includes a robot arm 12, a robot hand 14, finger parts 15, claw parts 18, a sensor 26 (omitted from illustration in Fig. 1), and a control section 30. In the robot 510 according to the fifth exemplary embodiment, at least one out of the first mounting/demounting parts 16 or the second mounting/demounting parts 20 is provided with a resilient member that deforms under external force, and with a measurement section 46 to measure a deformation amount of the resilient member. Note that the robot 510 according to the fifth exemplary embodiment is not limited to a configuration including three finger parts 15 arranged at 120° intervals as in the robot 310 according to the third exemplary embodiment.

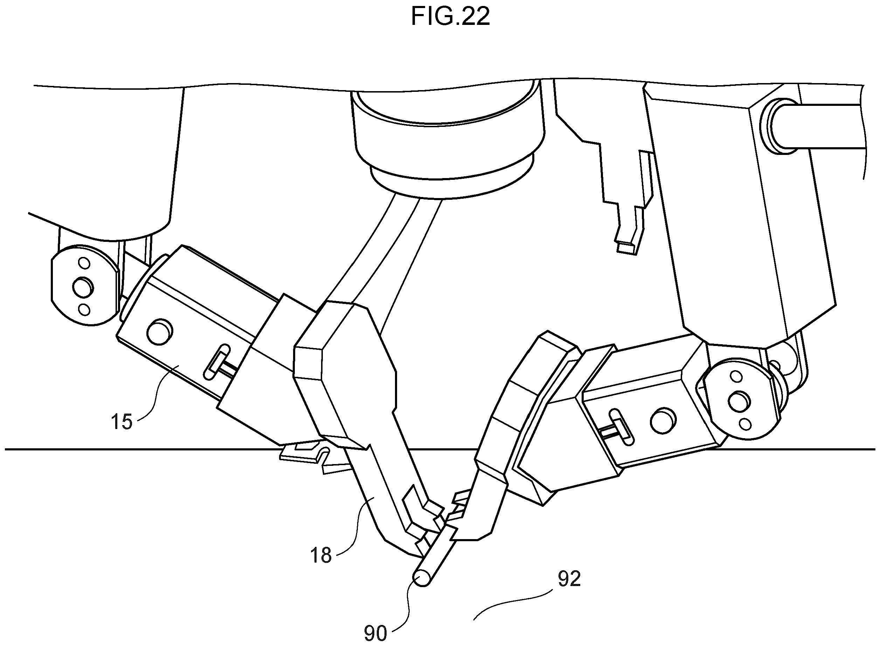

In the fifth exemplary embodiment, as illustrated in Fig. 22, consider a case in which a workpiece 90 such as a screw or the like laid flat on the work stand 92 is to be gripped by the claw parts 18 mounted to the finger parts 15.

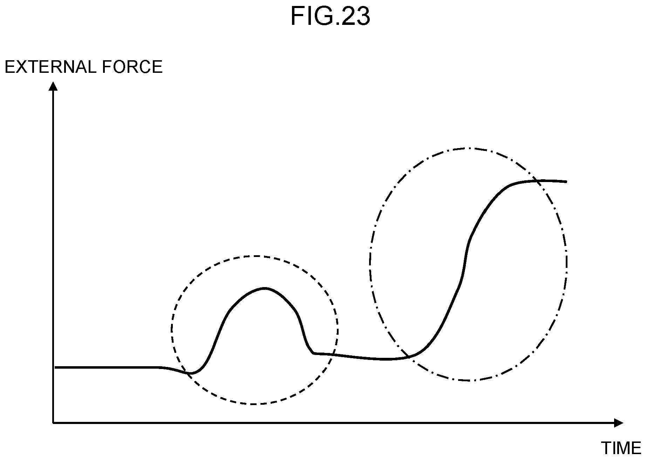

In a state in which the workpiece 90 is not being gripped by the claw parts 18, the control section 30 moves each of the claw parts 18 toward the work stand 92 on which the workpiece 90 is placed until a change is detected in the deformation amounts measured by the measurement sections 46, namely until a change is detected in the external force acting on the claw parts 18. As illustrated by the dashed-line portion in Fig. 23, when the control section 30 has detected an initial change in the external force, the claw part 18 is moved in a direction away from the work stand 92 until a change in the external force is no longer detected. The state in which a change in external force is initially detected indicates a state in which the claw part 18 has contacted the work stand 92.

The control section 30 then stops movement of the claw part 18 at the position where a change in external force is no longer being detected. This state is a state in which the claw parts 18 has been stopped at a position a slight distance away from the work stand 92. The control section 30 then executes a gripping action on the workpiece 90 using the claw parts 18 at this position. Specifically, the control section 30 maintains the height of the claw parts 18 when movement of the claw parts 18 was stopped, and moves the finger parts 15 in a closing direction, namely in directions such that each of the claw parts 18 approach the workpiece 90. More specifically, movement in the height direction of the robot arm 12 is controlled such that an amount of change in the height of the claw parts 18 accompanying the closing action of the finger parts 15 is cancelled out.

Moreover, the control section 30 detects completion of gripping of the workpiece 90 when a deformation amount has changed by a specific value or greater, and controls driving of the robot arm 12, the robot hand 14, and the finger parts 15 so as to move the workpiece 90 to the next work point. This specific value is a change amount of a greater magnitude than the change amount of the external force initially detected, as illustrated by the single-dot broken line portions of Fig. 23.

Next, description follows regarding operation and advantageous effects of the robot 510 according to the fifth exemplary embodiment. Note that detailed explanation will be omitted for points similar to those of the operation and advantageous effects of the robot 310 according to the third exemplary embodiment.

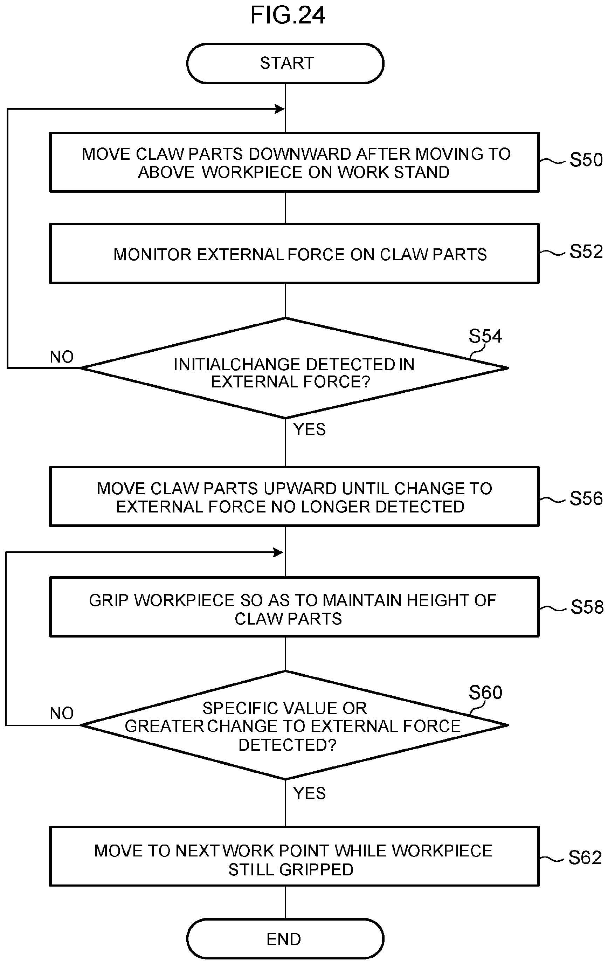

The control section 30 drives the robot arm 12 and mounts the claw parts 18 to the distal ends of the finger parts 15. Then the CPU 52 reads the robot control program from the storage device 56, and executes robot control processing by expanding and executing the robot control program in the memory 54. Fig. 24 is a flowchart illustrating a flow of robot control processing executed by the CPU 52 of the control section 30.

At step S50, the control section 30 moves the claw parts 18 so as to be positioned above the workpiece 90 placed on the work stand 92, and also moves the claw parts 18 downward. Next at step S52, the control section 30 acquires a deformation amount of the resilient member provided to at least one out of the first mounting/demounting parts 16 or the second mounting/demounting parts 20 as measured by the measurement sections 46, and monitors the deformation amounts, namely the external forces acting on the claw parts 18. Next at step S54, the control section 30 determines whether or not an initial change has been detected in the external force. Processing transitions to step S56 when an initial change has been detected in the external force, and processing returns to step S50 when none has been detected.

At step S56, the control section 30 moves the claw parts 18 in a direction away from the work stand 92, namely upward, until the change in external force is no longer detected. Next at step S58, the control section 30 stops movement of the claw parts 18 at a position where the change in external force was no longer detected. The control section 30 then, while maintaining the height of the claw parts 18 when the movement of the claw parts 18 was stopped, executes a gripping action by the claw parts 18 on the workpiece 90 by causing the finger parts 15 to move in a closing direction, namely in directions such that each of the claw parts 18 approach the workpiece 90.

Next at step S60, the control section 30 determines whether or not a change has been detected of a specific value or greater, wherein this is a value bigger than the change amount of the external force initially detected. Processing transitions to step S62 when a change in external force of the specific value or greater has been detected, and processing returns to step S58 when no change has been detected. At step S62, the control section 30 causes the workpiece 90 to be moved to the next work point in a state in which the workpiece 90 is gripped by the claw parts 18, and then ends the robot control processing.

As described above, in the robot according to the fifth exemplary embodiment, while monitoring the external force received by the claw parts in a state in which the claw parts have been mounted to the distal ends of the finger parts, control is performed so as to grip the workpiece with the claw parts while the claw parts are maintained at a height a slight distance away from the surface of the work stand. This thereby enables a position of the surface of the work stand to be recognized without employing sensors to recognize height, and moreover enables easy gripping to be performed even in cases in which a small sized workpiece such as a screw or the like is laid flat on the work stand.

Note that a method utilizing measurement values measuring the deformation amount of the resilient member provided to the at least one out of the first mounting/demounting parts or the second mounting/demounting parts is not limited to the examples of the third to the fifth exemplary embodiment as described above.

Moreover, the robot control processing executed by the CPU reading software (a program) in each of the above exemplary embodiments may be executed by various processors other than a CPU. Examples of such processors include programmable logic devices (PLD) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). Moreover, the robot control processing may be executed by any one of these various types of processor, or may be executed by a combination of two or more of the same type or different types of processor (such as plural FPGAs, or a combination of a CPU and an FPGA). The hardware structure of these various types of processors is more specifically an electric circuit combining circuit elements such as semiconductor elements.

Moreover, although in each of the above exemplary embodiments an embodiment was described in which the robot control processing was pre-stored (installed) on a storage device, there is no limitation thereto. The program may be provided in a format stored on a storage medium such as a CD-ROM, a DVD-ROM, a Bluray disc, USB memory, or the like. The program may also be provided in a format downloadable from an external device over a network.

### Explanation of Reference Numerals

- 10, 10A, 210, 310, 410, 510: robot
- 12: robot arm
- 14, 14A: robot hand
- 15, 15A: finger part
- 16, 16A: first mounting/demounting part
- 18: claw part
- 20: second mounting/demounting part
- 22: plunger
- 24: indentation
- 26: sensor
- 30: control section
- 40: stopper
- 42: first guide
- 44: second guide
- 46: measurement section
- 52: CPU
- 54: memory
- 56: storage device
- 58: input-output I/F
- 60: input-output device
- 62: storage medium reading device
- 64: communication I/F
- 66: bus
- 90: workpiece
- 92: work stand
- 94: ring
- 96: shaft

## Claims

1. A robot, comprising:
a claw part; and
a hand section provided at a distal end of a robot arm and including a first mounting/demounting part configured for mounting and demounting the claw part such that the claw part has a movable range in a mounted state of the claw part,
the claw part being provided with a second mounting/demounting part corresponding to the first mounting/demounting part and configured for mounting at and demounting from the hand section, the claw part being further configured to grip a workpiece by an opening/closing action of the hand section in a mounted state at the hand section.

2. The robot of claim 1, wherein the hand section includes a predisposed hand section configured without the first mounting/demounting part, and the first mounting/demounting part is configured for mounting at and demounting from the predisposed hand section.

3. The robot of claim 1 or claim 2, wherein at least one of the first mounting/demounting part or the second mounting/demounting part includes an electromagnetic mounting/demounting mechanism, a mounting/demounting mechanism using suction, or a mounting/demounting mechanism in which an engaged state is achieved between the first mounting/demounting part and the second mounting/demounting part by external force being imparted in a specific direction.

4. The robot of any one of claim 1 to claim 3, wherein at least one of the first mounting/demounting part or the second mounting/demounting part includes a resilient member configured to deform under external force and a measurement section configured to measure a deformation amount of the resilient member.

5. The robot of any one of claim 1 to claim 4, wherein at least one of the hand section or the claw part includes a stopper that suppresses movement of the claw part with respect to the hand section in a direction of a shear force or a direction of a pressing reaction force generated between the hand section and the claw part when a gripping task is performed to grip the workpiece with the claw part mounted at the hand section.

6. The robot of any one of claim 1 to claim 5, wherein at least one of the hand section or the claw part includes a first guide at a position that is in the vicinity of a mounting position of the claw part at the hand section and that does not obstruct movement of the claw part.

7. The robot of any one of claim 1 to claim 6, wherein, in a state prior to being mounted at the hand section, the claw part is disposed along a second guide provided at a position enabling mounting at and demounting from the hand section at a specific position and orientation.

8. The robot of claim 4, further comprising a control section configured to control driving of the robot arm and the hand section to mount the claw part at the hand section, and also so as to execute a task including gripping the workpiece with the claw part using the deformation amount measured by the measurement section.

9. The robot of claim 8, wherein:
the hand section is configured with three hand sections for gripping the workpiece from three directions in the same plane, disposed at 120° intervals about a center of a grip position of the workpiece; and
the control section is configured to estimate a tilt of the workpiece gripped by the hand section based on the deformation amount measured by the measurement section for each of the three hand sections, and to control driving of the robot arm and the hand section so as to execute the task while correcting the tilt of the workpiece to horizontal.

10. The robot of claim 8 or claim 9, wherein the control section is configured to monitor the deformation amount measured by the measurement section, and to issue a warning that displacement has occurred in the mounting position of the claw part with respect to the hand section, in a case in which a difference between the deformation amount when the claw part grips the workpiece and the deformation amount after a sudden change has occurred in the deformation amount is a specific value or greater.

11. The robot of any one of claim 8 to claim 10, wherein the control section is configured to perform control to:
in a state in which the workpiece is being gripped by the claw part, move the claw part toward a work surface on which the workpiece has been placed until a change in the deformation amount is detected;
in cases in which a change has been detected in the deformation amount, execute a gripping action on the workpiece by the claw part at a position to which the claw part has been moved in a direction away from the work surface until a change in the deformation amount is no longer detected; and
move the workpiece to a next work point in a case in which the deformation amount has changed by a specific value or greater.

12. A robot control method for a robot including a claw part and a hand section provided at a distal end of a robot arm and also including a first mounting/demounting part configured for mounting and demounting the claw part such that the claw part has a moveable range in a mounted state of the claw part, the claw part being provided with a second mounting/demounting part corresponding to the first mounting/demounting part and configured for mounting at and demounting from the hand section, the claw part being further configured to grip a workpiece by an opening/closing action of the hand section in a mounted state at the hand section, the method comprising a control section controlling driving of the robot arm and the hand section to mount the claw part at the hand section and also so as to execute a task including gripping the workpiece with the claw part.

13. A control program for a robot including a claw part and a hand section provided at a distal end of a robot arm and also including a first mounting/demounting part configured for mounting and demounting the claw part such that the claw part has a moveable range in a mounted state of the claw part, the claw part being provided with a second mounting/demounting part corresponding to the first mounting/demounting part and configured for mounting at and demounting from the hand section, the claw part being further configured to grip a workpiece by an opening/closing action of the hand section in a mounted state at the hand section, and a control section that controls driving of the robot arm and the hand section to mount the claw part at the hand section and also so as to execute a task including gripping the workpiece with the claw part, wherein the robot control program causes a computer to function as the control section.
